# EUROPÄISCHE PATENTSCHRIFT

(11) **EP 2 926 427 B1**
(45) Veröffentlichungstag und Bekanntmachung des Hinweises auf die Patenterteilung: **15.04.2020**
(21) Anmeldenummer: 13799283.0
(22) Anmeldetag: 29.11.2013
(51) Int. Cl.: H01H 71/74, H01H 83/04, H01H 83/14, H02H 3/347, H02H 3/33, H01H 71/12

(54) **FEHLERSTROMSCHUTZSCHALTER**
RESIDUAL-CURRENT CIRCUIT BREAKER
INTERRUPTEUR DE PROTECTION CONTRE LES COURANTS DE COURT-CIRCUIT

(30) Priorität: 29.11.2012 DE 102012111615
(43) Veröffentlichungstag der Anmeldung: 07.10.2015
(73) Patentinhaber: Eaton Intelligent Power Limited, Dublin 4 (IE)
(72) Erfinder: BARTONEK, Michael, A-1080 Wien (AT); DOBUSCH, Gerhard, A-1180 Wien (AT); HAIDER, Hermann, A-1220 Wien (AT); KERSTEN, Klaus-Dieter, 26919 Brake (DE); KOCH, Michael, 2100 Korneuburg (AT); RITZINGER, Georg, A-3423 Wolfpassing (AT); KOLM, Roman, A-3931 Schweiggers (AT)
(74) Vertreter: Eaton IP Group EMEA
(86) Internationale Anmeldenummer: PCT/EP2013/075175
(87) Internationale Veröffentlichungsnummer: WO 2014/083188

(56) Entgegenhaltungen:
- WO-A1-2007/121492
- WO-A2-2006/007608

## Beschreibung

Die Erfindung betrifft einen Fehlerstromschutzschalter gemäß dem Oberbegriff des Patentanspruches 1.

In zahlreichen Ländern sind Fehlerstromschutzschalter mit netzspannungsunabhänger Fehlerstromauslösung gesetzlich vorgeschrieben. Darunter versteht man Fehlerstromschutzschalter, welche keine mit Netzspannung versorgte Elektronik aufweisen, zum Detektieren und Bewerten eines auftretenden Fehlerstromes.

Derartige netzspannungsunabhänge Fehlerstromschutzschalter, weisen nur eine eingeschränkte Funktionalität auf, und sind nicht zum Detektieren sämtlicher in einer modernen Installationsumgebung auftretenden Fehlerströme geeignet.

Die WO 2007/121492 A1 beschreibt einen Fehlerstromschutzschalter mit netzspannungsunabhängiger Grundfunktion und netzspannungsabhängigen Zusatzfunktionen, welche durch ein Modul verwirklicht werden, welches entfernbar und, über Steckkontakte, an der Schalteinrichtung anordenbar ist.

Die WO 2006/007608 A2 beschreibt einen Fehlerstromschutzschalter mit einem Aufnahmeraum zur inneren Anordnung eines Moduls, welcher Modul mittels eines adapterartigen Sockels mit den Baugruppen des Fehlerstromschutzschalters verbunden ist bzw. in diesem Sockel angeordnet ist.

Aufgabe der Erfindung ist es daher einen Fehlerstromschutzschalter der eingangs genannten Art anzugeben, mit welchem die genannten Nachteile vermieden werden können, und mit welchem, bei Erhaltung der netzspannungsunabhängen Grundfunktionalität, der Schutz von Menschen und Anlagen vor gefährlichen Fehlerströmen erweitert werden kann.

Erfindungsgemäß wird dies durch die Merkmale des Patentanspruches 1 erreicht. Dadurch kann die Funktionalität eines netzspannungsunabhängigen Fehlerstromschutzschalters erweitert werden, ohne dass hierzu dessen Grundfunktionen beeinträchtigt werden, oder der innere Aufbau des Fehlerstromschutzschalters grundsätzlich verändert werden muss. Dadurch kann der betreffende Fehlerstromschutzschalter je nach Anwendungsfall erweitert werden, oder für sich allein als netzspannungsunabhängiger Fehlerstromschutzschalter verwendet werden. Dadurch kann einfach eine Erweiterung eines bestehenden Schutzkonzepts erfolgen. Dadurch kann je nach Bedarf auch ein Schutz vor glatten Gleichfehlerströmen ermöglicht werden.

Die Erfindung betrifft weiters ein Auslösemodul gemäß dem Gattungsbegriff des Patentanspruches 5.

Es ist bekannt in Fehlerstromschutzschaltern netzspannungsabhängige Komponenten einzubauen um dadurch die Funktionalität des betreffenden Schalters zu erweitern. Allerdings weisen derartige Fehlerstromschutzschalter den Nachteil auf, dass diese in vielen Ländern nicht zulässig sind, und auch wenn diese eine netzspannungsunabhängige Grundfunktionalität aufweisen, nicht als voll netzspannungsunabhängig angesehen werden. Zudem weisen derartige Fehlerstromschutzschalter nach wie vor ein - im Vergleich zu voll netzspannungsunabhängigen Fehlerstromschutzschaltern - höheres Ausfallrisiko auf, da die elektronischen Bauteile in derartigen Fehlerstromschutzschaltern einer erhöhten thermischen Belastung ausgesetzt sind, welche deren Lebensdauer negativ beeinflusst. Zudem ist es innerhalb eines herkömmlichen Gehäuses eines Fehlerstromschutzschalters nicht möglich thermisch höher belastbare Bauteile einzusetzen, da hiefür schlichtweg der Platz fehlt, ebenso wie für das Vorsehen von Kühlkörpern.

Aufgabe der Erfindung ist es weiters ein Auslösemodul der vorstehend genannten Art anzugeben, mit welchem die genannten Nachteile vermieden werden können, und mit welchem, bei Erhaltung der netzspannungsunabhängen Grundfunktionalität eines Fehlerstromschutzschalters, der Schutz von Menschen und Anlagen vor gefährlichen Fehlströmen erweitert werden kann.

Erfindungsgemäß wird dies durch die Merkmale des Patentanspruches 5 erreicht.

Dadurch kann die Funktionalität eines netzspannungsunabhängen Fehlerstromschutzschalters erweitert werden. Durch das hohe Platzangebot in einem außerhalb des Fehlerstromschutzschalters angeordneten Auslösemodul können Bauteile verwendet werden, welche eine hohe thermische Belastbarkeit aufweisen. Dadurch kann eine hohe Lebensdauer des Auslösemoduls erreicht werden. Dadurch kann vor allem die Funktionalität eines netzspannungsunabhängen Fehlerstromschutzschalters hinsichtlich dem Erkennen glatter Gleichfehlerströme erweitert werden.

Die Unteransprüche betreffen weitere vorteilhafte Ausgestaltungen der Erfindung. Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen eine lediglich bevorzugte Ausführungsform beispielhaft dargestellt ist, näher beschrieben. Dabei zeigt:
Fig. 1 ein Blockschaltbild einer bevorzugten Ausführungsform eines Fehlerstromschutzschalters sowie ein Blockschaltbild einer bevorzugten Ausführungsform eines Auslösemoduls; und
Fig. 2 eine Anordnung aus einem Fehlerstromschutzschalter und einem Auslösemodul.

Der Fehlerstromschutzschalter 1 ist dabei - in den dargestellten Ausführungsformen - ausgebildet als Fehlerstromschutzschalter 1 mit einer Sensoranordnung 2 zum netzspannungsunabhängigen Detektieren eines Fehlerstromes, und einer netzspannungsunabhängigen Auslöseschaltung 3, wobei die Sensoranordnung 2 einen Summenstromwandler 4 mit einer Sekundärwicklung 5 aufweist, welche Sekundärwicklung 5 mit der Auslöseschaltung 3 schaltungstechnisch verbunden ist, wobei der Fehlerstromschutzschalter 1 weiters aufweist:
- einen elektrischen Netzspannungsausgang 6,
- einen elektrischen Eingang 7, welcher mit der Auslöseschaltung 3 schaltungstechnisch verbunden ist,
- eine elektrische Schutzschalterschnittstelle 8, welche mit einer, auf dem Summenstromwandler 4 angeordneten, Tertiärwicklung 9 schaltungstechnisch verbunden ist.

Das Auslösemodul 23 ist - in den dargestellten Ausführungsformen - ausgebildet als Auslösemodul 23 umfassend eine Datenverarbeitungseinheit 24, einen elektrischen Netzspannungseingang 25, einen elektrischen Ausgang 26, und eine Modulschnittstelle 27, wobei die Modulschnittstelle 27 und der Ausgang 26 schaltungstechnisch mit der Datenverarbeitungseinheit 24 verbunden sind, und der Netzspannungseingang 25 über ein Netzteil 28 mit der Datenverarbeitungseinheit 24 verbunden ist.

Es ist vorgesehen, dass der gegenständliche Fehlerstromschutzschalter 1 und das gegenständliche Auslösemodul 23 in der Art Stecker/Steckdose zusammenwirken.

Dadurch kann die Funktionalität eines netzspannungsunabhängigen

Fehlerstromschutzschalters 1 erweitert werden, ohne dass hiezu dessen Grundfunktionen beeinträchtigt werden, oder der innere Aufbau des Fehlerstromschutzschalters 1 grundsätzlich verändert werden muss. Dadurch kann der betreffende Fehlerstromschutzschalter 1 je nach Anwendungsfall erweitert werden, oder für sich allein als netzspannungsunabhängiger Fehlerstromschutzschalter 1 verwendet werden. Dadurch kann einfach eine Erweiterung eines bestehenden Schutzkonzepts erfolgen. Dadurch kann je nach Bedarf auch ein Schutz vor glatten Gleichfehlerströmen ermöglicht werden.

Dadurch kann die Funktionalität eines netzspannungsunabhängen Fehlerstromschutzschalters 1 erweitert werden. Durch das hohe Platzangebot in einem außerhalb des Fehlerstromschutzschalters 1 angeordneten Auslösemodul 23 können Bauteile verwendet werden, welche eine hohe thermische Belastbarkeit aufweisen. Dadurch kann eine hohe Lebensdauer des Auslösemoduls 23 erreicht werden. Dadurch kann vor allem die Funktionalität eines netzspannungsunabhängen Fehlerstromschutzschalters 1 hinsichtlich dem Erkennen glatter Gleichfehlerströme erweitert werden.

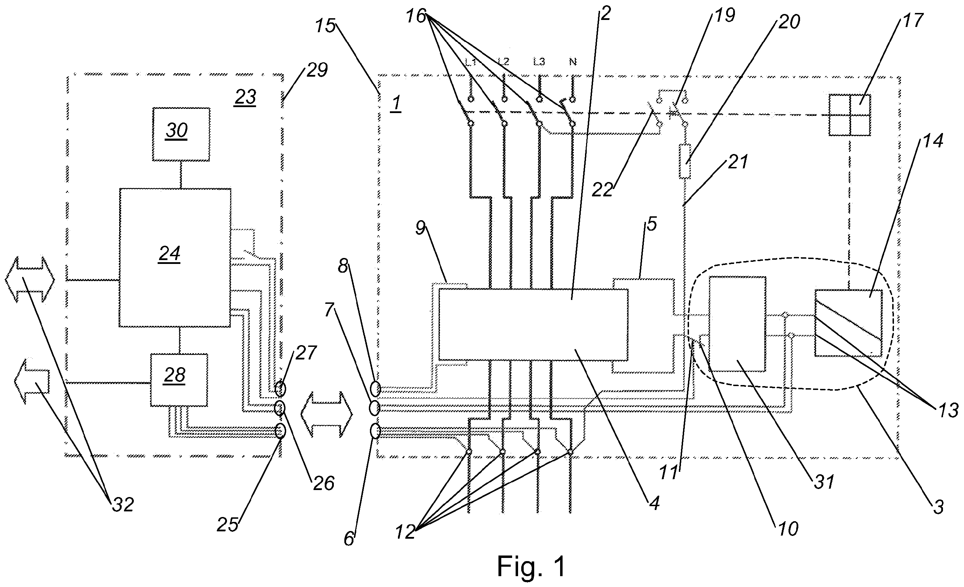

Fig. 1 zeigt die beiden Vorrichtungen, daher den Fehlerstromschutzschalter 1 und das Auslösemodul 23 jeweils als Blockschaltbild und jeweils besonders bevorzugte Ausführungsformen, welche nachfolgend beschrieben werden.

Der Fehlerstromschutzschalter 1 ist als Fehlerstromschutzschalter 1 mit netzspannungsunabhängiger Fehlerstromauslösung ausgebildet. Hiezu weist dieser eine Sensoranordnung 2 zum netzspannungsunabhängigen Detektieren eines Fehlerstromes auf, welche einen Summenstromwandler 4 aufweist, durch welchen, bzw. durch eine Öffnung von dessen Kern, die Leiter L1, L2, L3, N des elektrischen Netzes geführt sind, welches überwacht wird. In der Fig. 1 sind die drei Außenleiter L1, L2, L3 und der Neutralleiter N eines Drehstromnetzes eingezeichnet, es kann aber vorgesehen sein, lediglich einen Außenleiter L1 und den Neutralleiter N zu überwachen. Die Außenleiter L1, L2, L3 und der Neutralleiter N sind an Anschlussklemmen 12 des Fehlerstromschutzschalters 1 angeschlossen und über Trennkontakte 16 des Fehlerstromschutzschalters 1 geführt.

Um den Kern des Summenstromwandlers 4 ist in bekannter Weise eine Sekundärwicklung 5 angeordnet, welche mit einer Auslöseschaltung 3 verbunden ist. Die Sekundärwicklung 5 ist dabei bevorzugt mit einer Schaltung 31 zur Bewertung des Fehlerstromes verbunden. Bevorzugt ist dabei der Einsatz einer Energiespeicherschaltung vorgesehen, es kann aber auch jede andere Art einer netzspannungsunabhängigen Auslöseschaltung 3 vorgesehen sein. Die Schaltung 31 steuert einen elektromagnetischen Auslöser 14, etwa ein Relais bzw. ein Permanentmagnetauslöser, an, welcher wiederum mit einem Schaltschloss 17 mechanisch wirkverbunden ist. Das Schaltschloss 17 wirkt auf die Trennkontakte 16 um im Bedarfsfall ein schnelles Öffnen der Trennkontakte 16 zu bewirken.

Der dargestellte Fehlerstromschutzschalter 1 weist weiters eine Prüfeinrichtung auf, bestehend aus einem Testschalter 19, einem Prüfwiderstand 20, dem Prüfstromkreis 21 und dem Hilfskontakt 22.

Es ist vorgesehen, dass der Fehlerstromschutzschalter 1 einen elektrischen Netzspannungsausgang 6 aufweist. Dieser ist bevorzugt mit lastseitigen Anschlussklemmen 12 des Fehlerstromschutzschalters 1 schaltungstechnisch verbunden. Dabei ist vorgesehen, dass der Netzspannungsausgang 6 wenigstens mit einem Außenleiter L1 und dem Neutralleiter N verbunden ist.

Es ist weiters vorgesehen, dass der Fehlerstromschutzschalter 1 einen elektrischen Eingang 7 aufweist, welcher mit der Auslöseschaltung 3 schaltungstechnisch verbunden ist. Dabei ist bevorzugt vorgesehen, dass zwischen der Sekundärwicklung 4 und der Auslöseschaltung 3 ein elektrisch betätigbarer Schalter 10 angeordnet ist, und dass ein Steuereingang 11 des Schalters 10 mit dem Eingang 7 schaltungstechnisch verbunden ist. Dadurch besteht die Möglichkeit von außerhalb des Fehlerstromschutzschalters 1 die Auslöseschaltung 3 zu deaktivieren, indem der Schalter 10 angesteuert wird, durch Anlagen einer entsprechenden Steuerspannung an den Steuereingang 11, und der Schalter 10 den Stromfluss in der Auslöseschaltung 3 unterbricht. Der Schalter 10 ist bevorzugt als Relais ausgebildet, kann aber auch als Halbleiterschalter ausgebildet sein.

Gemäß der dargestellten bevorzugten Ausführungsform ist weiters vorgesehen, dass der Eingang 7 mit Steueranschlüssen 13 eines elektromagnetischen Auslösers 14 der Auslöseschaltung 3 schaltungstechnisch verbunden ist. Dadurch ist ein Auslösen des Fehlerstromschutzschalters 1 von außerhalb des Fehlerstromschutzschalters 1 möglich.

Es ist weiters vorgesehen, dass der Fehlerstromschutzschalter 1 eine elektrische Schutzschalterschnittstelle 8 aufweist. Zusätzlich ist auf dem Summenstromwandler 4 eine zusätzliche Wicklung zur Detektion von Fehlerströmen angeordnet, welche als Tertiärwicklung 9 bezeichnet wird. Es ist dabei vorgesehen, dass die Schutzschalterschnittstelle 8 schaltungstechnisch mit der Tertiärwicklung 9 verbunden ist. Dabei ist bevorzugt sowohl vorgesehen, Signale aus der Tertiärwicklung 9 auszulesen, aber auch die Tertiärwicklung 9 zudem bzw. zusätzlich dazu zu benutzen den Kern des Summenstromwandlers 4 mittels eines alternierenden Signals vorgebbar zu magnetisieren. Dies wird angewandt um Gleichfehlerströme zu detektieren. Bei einer entsprechenden Vormagnetisierung besteht die Möglichkeit über dieselbe Leitung bzw. Wicklung, über welche die Vormagnetisierung erfolgt, daher bei gegenständlicher Ausführungsform die Tertiärwicklung 9, Veränderungen zu detektieren, aus welchen auf Gleichfehlerströme geschlossen werden kann. Ein entsprechendes Verfahren ist etwa aus der veröffentlichten Patentanmeldung AT 511 285 A2 bekannt.

Die Begriffe Schutzschalterschnittstelle 8 und Modulschnittstelle 27 wurden jeweils in Hinblick auf eine Unterscheidung der jeweiligen Schnittstellen gewählt, welche Teil der unterschiedlichen Vorrichtungen, daher des Fehlerstromschutzschalter 1 bzw. des Auslösemoduls 23 sind. Diese Bezeichnungen leiten keine besondere Funktion ab, welche die betreffenden Schnittstellen erfüllen müssen. Vielmehr kann jede Form einer elektrischen Schnittstelle sowie die entsprechenden Kontaktstellen vorgesehen sein.

Zudem sei darauf hingewiesen, dass die Angaben wie Eingang/Ausgang jeweils sämtliche Leitungen bezeichnen, aus welcher der betreffende Eingang bzw. Ausgang gebildet ist. Bei der dargestellten bevorzugten Ausführungsform umfasst etwa der Netzspannungsausgang 6 vier Leiter.

Der Fehlerstromschutzschalter 1 weist erfindungsgemäß an einer Rückseite eine Montageaufnahme auf, insbesondere eine Aufnahme zur Befestigung des Fehlerstromschutzschalters 1 an einer Hutprofilschiene. Dabei ist erfindungsgemäß vorgesehen, dass der Netzspannungsausgang 6, der Eingang 7 und die Schutzschalterschnittstelle 8 an einer Fehlerstromschutzschalter-Seitenfläche 15 des Fehlerstromschutzschalters (1) angeordnet sind. Dadurch besteht die vorteilhafte Möglichkeit eine Baugruppe aus einem Fehlerstromschutzschalter 1 und einem Auslösemodul zu bilden. Die gegenständliche Erfindung betrifft ebenfalls ein Auslösemodul 23 umfassend eine Datenverarbeitungseinheit 24, einen elektrischen Netzspannungseingang 25, einen elektrischen Ausgang 26, und eine Modulschnittstelle 27, wobei die Modulschnittstelle 27 und der Ausgang 26 schaltungstechnisch mit der Datenverarbeitungseinheit 24 verbunden sind, und der Netzspannungseingang 25 über ein Netzteil 28 mit der Datenverarbeitungseinheit 24 verbunden ist.

Die einzelnen Eingänge 25, Ausgänge 26 und die Modulschnittstelle 27 des Auslösemoduls 23 sind daher zur Ansteuerung bzw. Kommunikation mit einem vorstehend beschriebenen Fehlerstromschutzschalter 1 vorgesehen und hinsichtlich der Ströme und die Spannungspegel entsprechend auszulegen. Es ist dabei selbstverständlich, dass eine entsprechende Steuerung des Fehlerstromschutzschalters 1 nur möglich ist, wenn dies gegeben ist. Durch entsprechende bauliche Ausgestaltung der jeweiligen Anschlüsse kann sichergestellt werden, dass nur kompatible Fehlerstromschutzschalter 1 und Auslösemodule 23 schaltungstechnisch verbunden werden.

Die Datenverarbeitungseinheit 24 ist bevorzugt als Mikroprozessor oder Mikrokontroller ausgebildet, es kann aber auch vorgesehen sein, dass die Datenverarbeitungseinheit 24 als programmierbarer Logikbaustein, etwa als PLD oder FPGA, ausgebildet ist. Dadurch ist eine reine Hardware-Ausführung der Datenverarbeitungseinheit 24 möglich.

Die Datenverarbeitungseinheit 24 ist bevorzugt dazu ausgebildet, ein vorgebbar alternierenden Signals zu Erzeugen und an der Modulschnittstelle 27 auszugeben. Wodurch eine Vormagnetisierung des Summenstromwandlers 4 erfolgen kann, zum Detektieren glatter Gleichfehlerströme.

Weiters ist bevorzugt vorgesehen, dass die Datenverarbeitungseinheit 24 dazu ausgebildet ist, Signale über die Modulschnittstelle 27 einzulesen, und diese mit wenigstens einem gespeicherten Vergleichswert oder Grenzwert zu vergleichen.

Zudem ist bevorzugt vorgesehen, dass die Datenverarbeitungseinheit 24 dazu ausgebildet ist, vorgebbare elektrische Signale zu erzeugen und an dem Ausgang 26 auszugeben. Damit sind insbesondere Steuersignale gemeint, um den Schalter 10 zu öffnen bzw. um den Auslöser 14 zu betätigen. Dabei kann es sich etwa um Ausgabe einer konstanten Spannung von 12 V handeln.

Es ist dabei bevorzugt vorgesehen, dass sobald die Datenverarbeitungseinheit 24 ausreichend spannungsversorgt wird, diese ein entsprechendes Schaltsignal erzeugt und am Ausgang 26 ausgibt um den Schalter 10 offen zu halten.

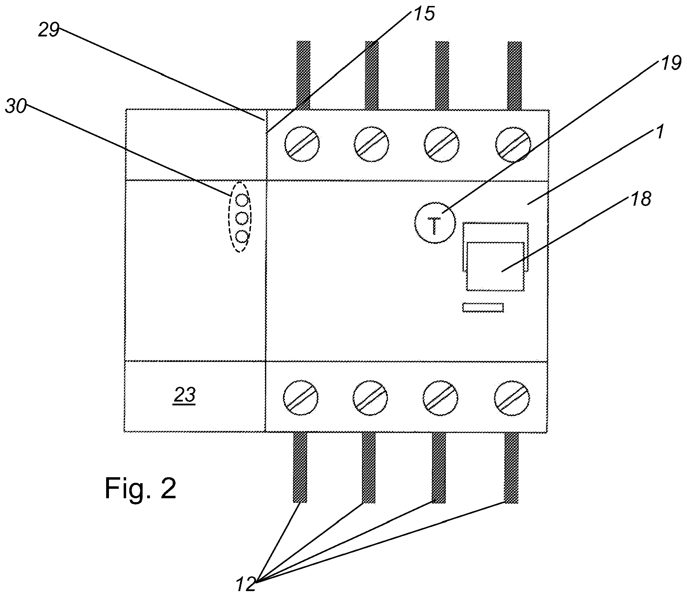

Weiters weist das Auslösemodul 23 bevorzugt noch weitere nicht dargestellte Komponenten auf, wie etwa A/D- und D/A-Wandler, bzw. Speicherbausteine. Zudem kann eine Anzeige 30 vorgesehen sein, um Betriebszustände anzuzeigen. Weiters kann eine Aufnahme für Speicherkarten vorgesehen sein, um Einstellungen bzw. Programmierungen der Datenverarbeitungseinheit 24 zu verändern. Ebenso eine entsprechende Bus-Schnittstelle. Gemäß einer besonders bevorzugten Ausführungsform ist vorgesehen, dass das Auslösemodul 23 an einer Rückseite eine Montageaufnahme aufweist, und dass der Netzspannungseingang 25, der Ausgang 26 und die Modulschnittstelle 27 an einer Auslösemodul-Seitenfläche 29 des Auslösemoduls 23 angeordnet sind, wodurch die bereits erwähnte vorteilhafte seitliche Kopplung mit einem gegenständlichen Fehlerstromschutzschalter 1 ermöglicht wird. Fig. 2 zeigt eine entsprechende Anordnung.

Weiters ist vorgesehen, dass das Auslösemodul 23 entsprechende Anschlüsse aufweist um ein weiteres Auslösemodul 23 an dieses anzuschließen, was in Fig. 1 durch die seitlich des Auslösemodul 23 abgehenden Doppelpfeile 32 symbolisiert wird.

## Patentansprüche

1. Fehlerstromschutzschalter (1) mit einer Sensoranordnung (2) zum netzspannungsunabhängigen Detektieren eines Fehlerstromes, und einer netzspannungsunabhängigen Auslöseschaltung (3), wobei die Sensoranordnung (2) einen Summenstromwandler (4) mit einer Sekundärwicklung (5) aufweist, welche Sekundärwicklung (5) mit der Auslöseschaltung (3) schaltungstechnisch verbunden ist, wobei der Fehlerstromschutzschalter (1) weiters aufweist:
- einen elektrischen Netzspannungsausgang (6),
- eine elektrische Schutzschalterschnittstelle (8), welche mit einer, auf dem Summenstromwandler (4) angeordneten, Tertiärwicklung (9) schaltungstechnisch verbunden ist,
**dadurch gekennzeichnet, dass** der Fehlerstromschutzschalter (1) einen elektrischen Eingang (7) aufweist, welcher mit der Auslöseschaltung (3) schaltungstechnisch verbunden ist, an einer Rückseite eine Montageaufnahme aufweist, und dass der Netzspannungsausgang (6), der Eingang (7) und die Schutzschalterschnittstelle (8) an einer Fehlerstromschutzschalter-Seitenfläche (15) des Fehlerstromschutzschalters (1) angeordnet sind.

2. Fehlerstromschutzschalter (1) nach Anspruch 1, **dadurch gekennzeichnet, dass** zwischen der Sekundärwicklung (4) und der Auslöseschaltung (3) ein elektrisch betätigbarer Schalter (10) angeordnet ist, wobei ein Steuereingang (11) des Schalters (10) mit dem Eingang (7) schaltungstechnisch verbunden ist.

3. Fehlerstromschutzschalter (1) nach Anspruch 1 oder 2, **dadurch gekennzeichnet, dass** der Netzspannungsausgang (6) mit lastseitigen Anschlussklemmen (12) des Fehlerstromschutzschalters (1) schaltungstechnisch verbunden ist.

4. Fehlerstromschutzschalter (1) nach einem der Ansprüche 1 bis 3, **dadurch gekennzeichnet, dass** der Eingang (7) mit Steueranschlüssen (13) eines elektromagnetischen Auslösers (14) der Auslöseschaltung (3) schaltungstechnisch verbunden ist.

5. Auslösemodul (23) umfassend eine Datenverarbeitungseinheit (24), einen elektrischen Netzspannungseingang (25), einen elektrischen Ausgang (26), und eine Modulschnittstelle (27), wobei die Modulschnittstelle (27) und der Ausgang (26) schaltungstechnisch mit der Datenverarbeitungseinheit (24) verbunden sind, und der Netzspannungseingang (25) über ein Netzteil (28) mit der Datenverarbeitungseinheit (24) verbunden ist, **dadurch gekennzeichnet, dass** das Auslösemodul (23) an einer Rückseite eine Montageaufnahme aufweist, und dass der Netzspannungseingang (25), der Ausgang (26) und die Modulschnittstelle (27) an einer Auslösemodul-Seitenfläche (29) des Auslösemoduls (23) angeordnet sind.

6. Auslösemodul (23) nach Anspruch 5, **dadurch gekennzeichnet, dass** die Datenverarbeitungseinheit (24) ausgebildet ist:
- zum Erzeugen und Ausgeben eines vorgebbar alternierenden Signals an der Modulschnittstelle (27) zur, und/oder
- zum Einlesen eines Signals über die Modulschnittstelle (27) und Vergleich des eingelesenen Signals mit wenigstens einem Grenzwert, und/oder
- Erzeugen und Ausgeben eines vorgebbaren elektrischen Signals an dem Ausgang (26).

7. Anordnung aus einem Fehlerstromschutzschalter (1) nach einem der Ansprüche 1 bis 4 und einem Auslösemodul (23) nach einem der Ansprüche 5 oder 6, wobei der Netzspannungsausgang (6) des Fehlerstromschutzschalters (1) mit dem Netzspannungseingang (25) des Auslösemoduls (23) kontaktiert ist, wobei der Eingang (7) des Fehlerstromschutzschalters (1) mit dem Ausgang (26) des Auslösemoduls (23) kontaktiert ist, und wobei die Schutzschalterschnittstelle (8) des Fehlerstromschutzschalters (1) mit der Modulschnittstelle (27) des Auslösemoduls (23) kontaktiert ist.

8. Anordnung nach Anspruch 7, **dadurch gekennzeichnet, dass** die Fehlerstromschutzschalter-Seitenfläche (15) an der Auslösemodul-Seitenfläche (29) angeordnet ist.

## Claims

1. Residual-current circuit breaker (1) having a sensor assembly (2) for detecting a residual current independently of the mains voltage, and a trip circuit (3) independent of the mains voltage, wherein the sensor assembly (2) has a core-balance current transformer (4) with a secondary winding (5), which secondary winding (5) is connected by circuitry to the trip circuit (3), wherein the residual-current circuit breaker (1) further comprises:
- an electrical mains voltage output (6),
- an electrical circuit breaker interface (8) which is connected by circuitry to a tertiary winding (9) arranged on the core-balance current transformer (4),
**characterised in that** the residual-current circuit breaker (1) has an electrical input (7), which is connected to the trip circuit (3) by circuitry, has a mounting receptacle on a rear side, and **in that** the mains voltage output (6), the input (7) and the circuit breaker interface (8) are arranged on a residual-current circuit breaker side surface (15) of the residual-current circuit breaker (1).

2. Residual-current circuit breaker (1) according to claim 1, **characterised in that** an electrically actuatable switch (10) is arranged between the secondary winding (4) and the trip circuit (3), wherein a control input (11) of the switch (10) is connected by circuitry to the input (7).

3. Residual-current circuit breaker (1) according to claim 1 or 2, **characterised in that** the mains voltage output (6) is connected by circuitry to the load-side connection terminals (12) of the residual-current circuit breaker (1).

4. Residual-current circuit breaker (1) according to any one of claims 1 to 3, **characterised in that** the input (7) is connected by circuitry to control connections (13) of an electromagnetic trigger (14) of the trip circuit (3).

5. Tripping module (23) comprising a data processing unit (24), an electrical mains voltage input (25), an electrical output (26), and a module interface (27), wherein the module interface (27) and the output (26) are connected to the data processing unit (24) by circuitry, and the mains voltage input (25) is connected to the data processing unit (24) via a power supply (28), **characterised in that** the tripping module (23) has a mounting receptacle on a rear side, and **in that** the mains voltage input (25), the output (26) and the module interface (27) are arranged on a tripping module side surface (29) of the tripping module (23).

6. Tripping module (23) according to claim 5, **characterised in that** the data processing unit (24) is designed:
- for generating and outputting a predeterminable alternating signal at the module interface (27) for and/or
- for reading a signal via the module interface (27) and comparing the read signal with at least one limit value, and/or
- generating and outputting a predeterminable electrical signal at the output (26).

7. Arrangement of a residual-current circuit breaker (1) according to any one of claims 1 to 4 and a tripping module (23) according to any one of claims 5 or 6, wherein the mains voltage output (6) of the residual-current circuit breaker (1) is contacted with the mains voltage input (25) of the tripping module (23), wherein the input (7) of the residual-current circuit breaker (1) is contacted with the output (26) of the tripping module (23), and wherein the circuit breaker interface (8) of the residual-current circuit breaker (1) is contacted with the module interface (27) of the tripping module (23).

8. Arrangement according to claim 7, **characterised in that** the residual-current circuit breaker side surface (15) is arranged on the tripping module side surface (29).

## Revendications

1. Interrupteur de protection contre les courants de court-circuit (1) avec un agencement de capteur (2) destiné à une détection d'un courant de court-circuit indépendante de la tension de réseau, et un circuit de déclenchement (3) indépendant de la tension de réseau, dans lequel l'agencement de capteur (2) présente un transformateur de courant totalisateur (4) avec un bobinage secondaire (5), ledit bobinage secondaire (5) étant relié au circuit de déclenchement (3) en termes de technique de commutation, dans lequel l'interrupteur de protection contre les courants de court-circuit (1) présente en outre :
- une sortie électrique de tension de réseau (6),
- une interface d'interrupteur de protection électrique (8) qui est reliée en termes de technique de commutation à un bobinage tertiaire (9) agencé sur le transformateur de courant totalisateur (4),
**caractérisé en ce que** l'interrupteur de protection contre les courants de court-circuit (1) présente une entrée électrique (7) reliée au circuit de déclenchement (3) en termes de technique de commutation, présente une prise de montage au niveau d'un côté arrière, et **en ce que** la sortie de tension de réseau (6), l'entrée (7) et l'interface d'interrupteur de protection (8) sont agencées au niveau d'une surface latérale d'interrupteur de protection contre les courants de court-circuit (15) de l'interrupteur de protection contre les courants de court-circuit (1).

2. Interrupteur de protection contre les courants de court-circuit (1) selon la revendication 1, **caractérisé en ce qu'**un interrupteur à commande électrique (10) est agencé entre le bobinage secondaire (4) et le circuit de déclenchement (3), dans lequel une entrée de commande (11) de l'interrupteur (10) est reliée à l'entrée (7) en termes de technique de commutation.

3. Interrupteur de protection contre les courants de court-circuit (1) selon la revendication 1 ou 2, **caractérisé en ce que** la sortie de tension de réseau (6) est reliée aux bornes de raccordement (12), situées du côté charge, de l'interrupteur de protection contre les courants de court-circuit (1) en termes de technique de commutation.

4. Interrupteur de protection contre les courants de court-circuit (1) selon l'une quelconque des revendications 1 à 3, **caractérisé en ce que** l'entrée (7) est reliée à des raccordements de commande (13) d'un déclencheur électromagnétique (14) du circuit de déclenchement (3) en termes de technique de commutation.

5. Module déclencheur (23) comprenant une unité de traitement de données (24), une entrée électrique de tension de réseau (25), une sortie électrique (26) et une interface de module (27), dans lequel l'interface de module (27) et la sortie (26) sont reliées à l'unité de traitement de données (24) en termes de technique de commutation, et l'entrée de tension de réseau (25) est reliée à l'unité de traitement de données (24) par l'intermédiaire d'un bloc d'alimentation (28), **caractérisé en ce que** le module déclencheur (23) présente une prise de montage au niveau d'un côté arrière, et **en ce que** l'entrée de tension de réseau (25), la sortie (26) et l'interface de module (27) sont agencées au niveau d'une surface latérale de module déclencheur (29) du module déclencheur (23).

6. Module déclencheur (23) selon la revendication 5, **caractérisé en ce que** l'unité de traitement de données (24) est conçue :
- pour générer et émettre un signal alternatif spécifiable au niveau de l'interface de module (27) pur, et/ou
- pour lire un signal par l'intermédiaire de l'interface de module (27) et comparer le signal lu à au moins une valeur limite, et/ou
- pour générer et émettre un signal électrique spécifiable au niveau de la sortie (26).

7. Agencement constitué d'un interrupteur de protection contre les courants de court-circuit (1) selon l'une quelconque des revendications 1 à 4 et d'un module déclencheur (23) selon l'une quelconque des revendications 5 ou 6, dans lequel la sortie de tension de réseau (6) de l'interrupteur de protection contre les courants de court-circuit (1) est mise en contact avec l'entrée de tension de réseau (25) du module déclencheur (23), dans lequel l'entrée (7) de l'interrupteur de protection contre les courants de court-circuit (1) est mise en contact avec la sortie (26) du module déclencheur (23), et dans lequel l'interface d'interrupteur de protection (8) de l'interrupteur de protection contre les courants de court-circuit (1) est mise en contact avec l'interface de module (27) du module déclencheur (23).

8. Agencement selon la revendication 7, **caractérisé en ce que** la surface latérale d'interrupteur de protection contre les courants de court-circuit (15) est agencée au niveau de la surface latérale de module déclencheur (29).
